# FASCICULE DE BREVET EUROPEEN

(11) **EP 0 535 206 B1**
(45) Date de publication et mention de la délivrance du brevet: **23.07.1997**
(21) Numéro de dépôt: 92909317.7
(22) Date de dépôt: 10.04.1992
(51) Int. Cl.: F16B 12/40, F16B 21/16, A47B 47/02

(54) **PROCEDE D'ASSEMBLAGE POUR LA CONSTRUCTION DE MOBILIER MODULAIRE ET LE MOBILIER AINSI REALISE**
ZUSAMMENSETZUNGSMETHODE ZUR KONSTRUKTION MODULARER MÖBELSTÜCKE UND SO ERHALTENE MÖBELSTÜCKE
ASSEMBLY METHOD FOR CONSTRUCTING MODULAR FURNITURE, AND FURNITURE THEREBY OBTAINED

(30) Priorité: 19.04.1991 FR 9104891
(43) Date de publication de la demande: 07.04.1993
(73) Titulaire: FORMES NOUVELLES S.A., F-95470 Survilliers (FR)
(72) Inventeur: HAZAN, Jacques, F-75015 Paris (FR)
(74) Mandataire: Burtin, Jean-François
(86) Numéro de dépôt international: FR9200318
(87) Numéro de publication internationale: WO9218779

(56) Documents cités:
- EP-A- 0 028 193
- FR-A- 1 581 477
- FR-A- 2 078 648
- FR-A- 2 233 882
- GB-A- 448 527
- GB-A- 1 117 545
- US-A- 4 923 322

## Description

La présente invention se rapporte au domaine de la mécanique et plus particulièrement à la construction de mobilier de bureau.

Elle a plus particulièrement pour objet un dispositif d'assemblage permettant la construction d'éléments de mobilier modulaires pour former des structures, des formes et des dispositions de couleurs variées.

Le mobilier modulaire présente, à l'heure actuelle, dans l'architecture intérieure et surtout dans la constitution de mobilier de bureau, une grande place tant sur le plan fonctionnel que sur le plan esthétique.

Les mobiliers de bureau doivent permettre un gain de place, posséder une fonctionnalité élevée adaptée à tout type de machine de bureau, présenter une esthétique bien assortie au cadre des pièces où ils sont installés et surtout permettre des assemblages de différents meubles, de forme, de dimension et de fonctions différentes. On réalise ainsi des ensembles disposés soit dans le même plan longitudinal, soit dans un ou plusieurs plans perpendiculaires dont les dimensions peuvent évoluer, dont la composition peut être variée en fonction de l'évolution des machines de bureau et dont les éléments constitutifs peuvent être assemblés, en hauteur ou en longueur, selon des axes verticaux ou horizontaux. On obtient de cette façon des mobiliers modulaires présentant des éléments alignés ou de retour pour les bureaux ou des éléments disposés à des niveaux différents.

On peut ainsi former des bibliothèques, des vitrines, des bureaux de secrétaire qu'il est possible d'assembler ou de juxtaposer, de manière à obtenir un mode de présentation homogène, un mode de réalisation stable, solide et adapté à toutes les situations.

On connaissait déjà, par le brevet britannique 448 527, un dispositif d'assemblage de siège de véhicules automobiles comportant une tige filetée à l'intérieur d'un montage tubulaire destiné à obtenir l'assujettissement des pièces constitutives de ce cadre.

Dans ce dispositif l'insert (e) joue un rôle d'écrou pour la vis (g) et contribue à l'assemblage de deux tubes seulement (b) et (c), ou de trois tubes à condition, nécessairement, que le tube commun soit de section plus grande que celle des autres tubes. L'insert (e), décrit dans ce brevet, ne peut donc permettre qu'une disposition ne comportant au maximum que quatre directions sur un même plan, soit horizontal, soit vertical, alors que le nouveau procédé, objet de la présente demande, permet une construction dans six directions différentes.

En outre, les vis à tête polygonales, décrites dans ce brevet, sont du type standard à 6 pans, eL leur action est limitée à la compression des pièces (a) et (e) au travers de l'adaptateur et ce serrage ne peut s'effectuer que de l'intérieur du tube.

L'invention a donc pour objet un dispositif d'assemblage conformement à la revendication 1, qui permet la construction d'éléments de mobilier modulaire caractérisé en ce qu'il utilise principalement des tubes métalliques creux, ouverts aux deux extrémités, à l'intérieur desquels se trouve inséré, d'une manière permanente, un manchon nervuré à l'extérieur, lui-même ouvert aux deux extrémités, sur lequel vient coopérer une vis à tête plate dont le filetage vient s'insérer dans la partie filetée d'une pièce de jonction cylindrique filetée en son centre et comportant sur son pourtour d'autres orifices filetés sur lesquels viennent se fixer d'une manière permanente, d'autres tubes métalliques assujettis par l'intermédiaire d'une vis à tête plate dont la partie filetée traverse un embout de forme sphérique, dont la surface terminale de forme ovoïde s'applique sans solution de continuité sur la surface de la pièce de jonction.

Un mode préféré de l'invention concerne également un dispositif d'assemblage d'échafaudages démontables établis à l'aide des tubes rectilignes et autorisant la fixation d'un dispositif tubulaire à un autre dispositif tubulaire sans noeuds de liaison apparents, caractérisé en ce qu'il est formé essentiellement de tubes creux ouverts aux deux extrémités, auquel coopère vers l'intérieur, le filetage d'une tige filetée à tête plate et vers l'extérieur une seconde tige filetée qui vient coopérer avec le filetage d'une bague extérieure, un anneau intermédiaire tournant librement autour de la partie cylindrique externe du tube creux et portant en son milieu un orifice fileté permettant la fixation d'une tige filetée, assurant la rotation de l'ensemble et d'une bague extérieure reposant sur l'anneau par un rebord de diamètre légèrement plus grand que l'anneau et présentant, au centre de ladite pièce, un orifice fileté.

Cet ensemble, une fois assemblé, ne présente aucune aspérité, aucun renflement, aucune boule sphérique de fixation. Les montages tubulaires ainsi réalisés ne présentent aucune surface débordante. L'anneau intermédiaire peut être bloqué en rotation lorsque la tige filetée qu'il porte vient serrer sur la tête de la tige filetée de la partie externe.

Cet ensemble réalise donc un dispositif d'assemblage sur lequel un deuxième élément tubulaire vertical peut venir se fixer par l'intermédiaire de la vis creuse à tête plate. Sur le segment cylindrique intermédiaire, la tige filetée introduite dans l'orifice fileté permet le blocage en rotation de cette portion intermédiaire et permet également, grâce au filetage extérieur porté par cette tige, d'assujettir un deuxième élément d'assemblage formant un angle de 45, 60 ou de 90° qui autorise la fixation par l'intermédiaire d'une vis creuse à tête plate d'au moins un élément tubulaire cylindrique disposé perpendiculairement.

Ainsi, de proche en proche, il sera possible d'édifier un échafaudage tubulaire de forme carrée, rectangulaire ou polyédrique, qui constituera le point de départ de l'assemblage successif d'éléments modulaires superposés ou emboîtés.

Le grand avantage de ce système d'assemblage sera donc, en l'absence de noeuds d'assemblage, de présenter une surface entièrement lisse, une disposition parfaitement homogène. Ce système autorise aussi l'assemblage dans toutes les directions d'un faisceau d'éléments tubulaires et permet la rotation de panneaux mobiles.

Ainsi, il sera possible de former des meubles de bureau par éléments modulaires et surtout de réaliser des vitrines en permettant la fixation de portes grâce à des abattants, des équerres ou de parois vitrées fixés sur lesdits éléments tubulaires.

Entre les parties tubulaires, des panneaux sont disposés, présentant des champs profilés, pour venir s'insérer à cheval sur la partie tubulaire. Ainsi, le panneau est parfaitement assujetti et ne peut sortir de la gorge que par pression ou par extraction selon un mouvement exercé de l'intérieur vers l'extérieur.

L'invention est décrite d'une manière plus détaillée dans ce qui va suivre en faisant référence aux dessins annexés :

Les dispositifs d'assemblage amovible représentés comportent chacun une pièce d'assemblage cylindrique disposée entre les tubes à assembler et munie d'un alésage orientable vers chaque extrémité du tube.

Dans un mode d'exécution de l'invention actuellement préféré, l'embout selon l'invention vient s'emboîter dans une partie creuse portée par un des bords métalliques venant s'ajuster sur le plan de travail soit longitudinalement, soit transversalement et en débordant légèrement, de sorte que ledit embout s'engage d'une manière serrée d'une longueur correspondant à l'espace compris entre le bord externe et le rebord de la pièce. Ainsi, l'embout est-il assujetti d'une manière solide au plan de travail sans présenter d'aspérité et en permettant le montage solide d'une structure tubulaire verticale ou horizontale.

La structure tubulaire constitue le point de départ de la construction d'éléments modulaires pourvus de parois rigides insérées entre les tubes par des champs en forme de gorge. On détermine ainsi la formation d'éléments de rangement ou de classement tels qu'éléments à dossiers suspendus ou de placards, de bibliothèques ou de vitrines. Les parois peuvent être en matériau transparent ou diaphane comme du verre, un polymère de polycarbonate. Des éléments opaques et des éléments transparents peuvent être assemblés conjointement pour former des éléments transparents sur une face et opaques sur les autres faces.

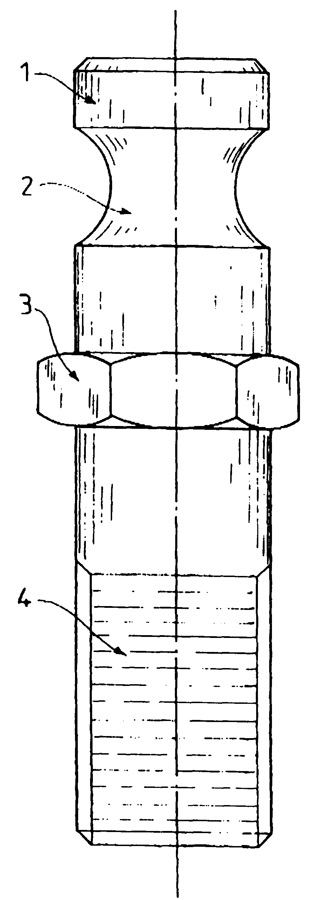

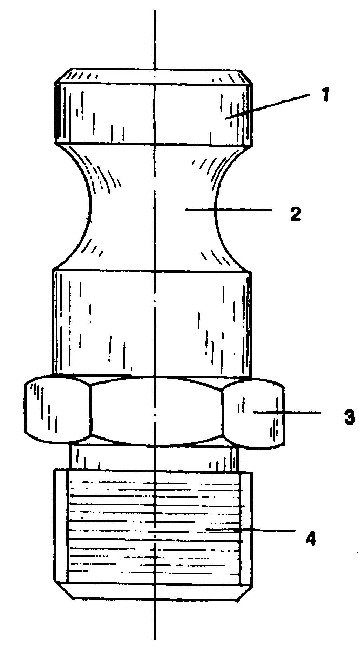

Dans un mode de réalisation préféré de l'invention, la vis à tête plate, fonctionnant comme moyen de solidarisation, est illustrée par la figure 1, représentant la vis à tête plate en vue de profil. On y voit la tête plate (1) de la tige filetée, la gorge (2), la bague de serrage (3) et l'extrémité de la vis (4).

La tête plate (1) possède un diamètre de l'ordre de 8 mm et une hauteur de 6 mm, la gorge (2) forme un angle obtus de 225° environ et l'anneau de serrage (3) est formé d'un polygone, notamment d'un hexagone, monté d'une manière fixe sur le corps de la tige filetée. L'extrémité de la vis (4) présente une partie terminale filetée qui vient se placer par exemple dans un trou taraudé de l'embout oblong.

La vis à tête plate assurant la solidarisation des pièces peut également comporter une partie filetée beaucoup plus courte. La longueur totale qui est de 37 mm environ dans une vis longue, est seulement de 22 mm environ, toutes les autres dimensions restant inchangées.

La figure 2 représente schématiquement une vis à tête plate à tige courte.

La figure 3 fournit une illustration d'un type d'insert fileté formé d'un manchon nervuré monté serré à l'intérieur des tubes métalliques. Sur ce dessin, les nervures sont figurées en (9). Elles sont destinées à assurer le serrage à l'intérieur du tube non représenté.

Les vis à tête plate viennent s'engager sur l'un ou l'autre des orifices (10) et (10').

La figure 4 montre en éclaté la structure d'un piétement d'angle d'un meuble de bureau selon l'invention. Il comporte l'embout oblong (10) ou (10'), destiné à venir s'insérer dans le longeron longitudinal (11) d'une bordure du plan de travail par l'intermédiaire de deux vis à tête plate (12) et (12') qui sont assemblées par l'intermédiaire de la pièce (10) ou (10') au tube métallique (13) en utilisant un manchon creux (14) de surface ovoïde s'appliquant exactement sur la face de la pièce d'assemblage (15) portant les orifices taraudés non représentés sur ce dessin.

La figure 5 montre les détails de ce montage à plus grande échelle mettant en évidence les deux orifices filetés de chacun des embouts oblongs (10) et (10') destinés à assurer l'assemblage du tube (13) et des deux manchons (11).

La figure 6 montre la disposition à deux niveaux des dispositifs d'assemblage selon l'invention. Elle comporte en premier lieu le tube métallique (11) portant des orifices filetés (14) et (14') à son sommet sur lequel on dispose une pièce d'assemblage cylindrique (15) portant également des orifices filetés, sur laquelle viennent s'appliquer deux embouts (16) et (16') présentant une surface ovoïde venant coopérer étroitement avec la surface de la pièce d'assemblage (15).

L'assemblage des tubes métalliques horizontaux (17) et (17') figurés sur ce dessin se fait par l'intermédiaire des vis à tête plate (12) et (12') dont la partie filetée passe à travers l'orifice central de la pièce (16) et (16') et pénètre dans l'orifice fileté (24) et (24') de la pièce d'assemblage (15) disposé au centre.

La tête plate de la vis (12) ou (12') vient s'insérer dans le manchon fileté situé à l'intérieur du tube (17).

La fixation verticale avec le tube métallique se fait par l'intermédiaire d'une vis à tête plate courte (19) dont la tête plate (1) vient s'insérer dans le manchon fileté situé à l'intérieur du tube (18). Un orifice fileté (20) placé dans le tube (18) permet de disposer une vis pointeau qui serre la tête de la vis (1) au niveau de sa gorge (2).

A l'extrémité supérieure du tube (18), on insère un embout métallique cylindrique (21) portant des orifices filetés (22) sur lesquels viendront se fixer d'une manière permanente un ou plusieurs tubes métalliques (23) et (23') par l'intermédiaire d'une pièce (16") et (16"') à l'aide d'une vis à tête plate (28) et (28').

De cette façon, il est possible de réaliser un bâti à deux étages et les panneaux viendront s'insérer par une rainure de forme circulaire entre l'axe vertical et les tubes latéraux (23') (17') et (23) (17).

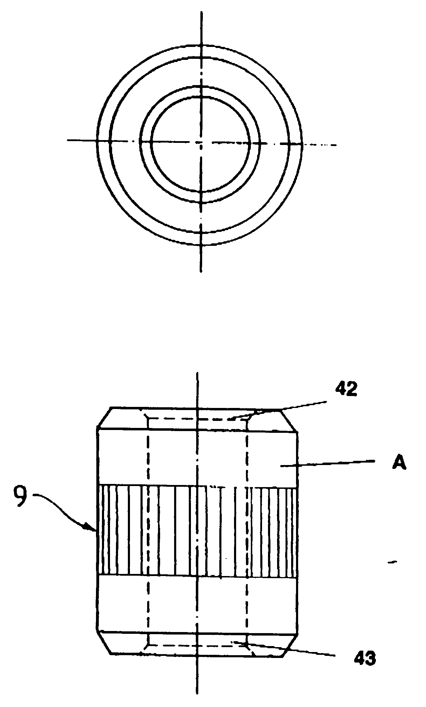

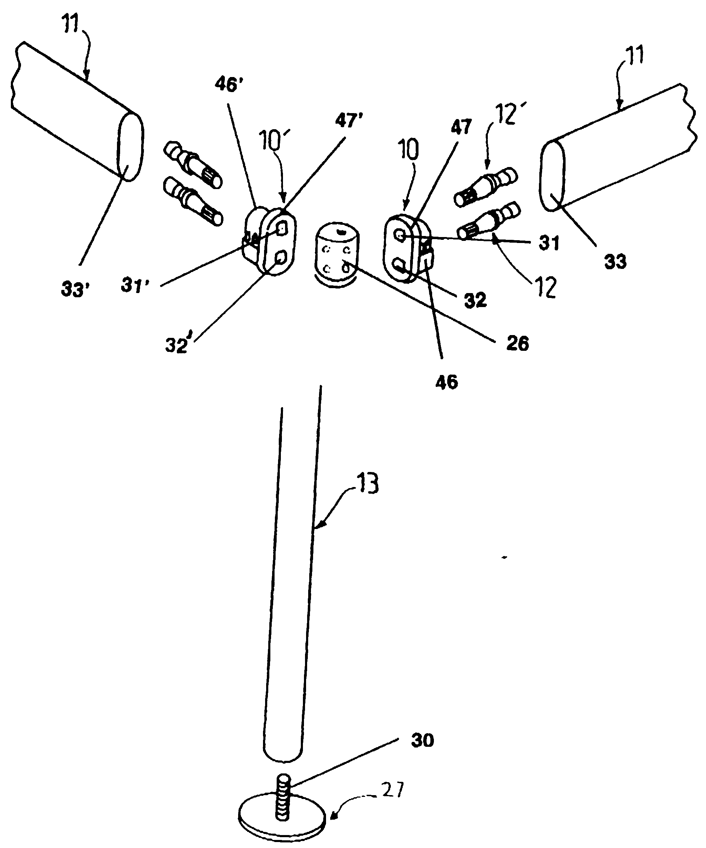

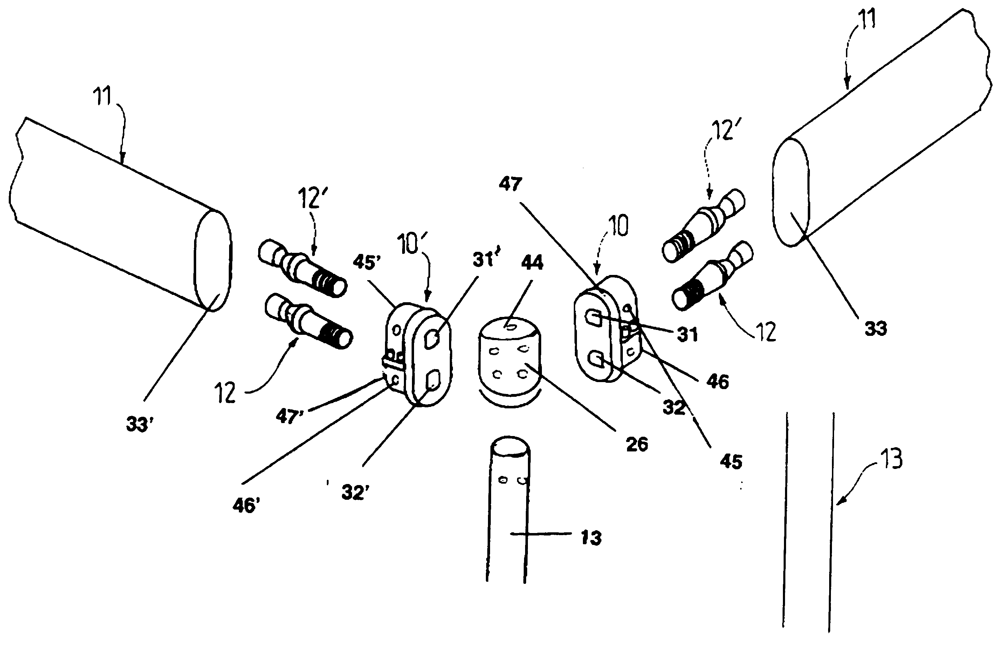

Selon les besoins, le bâti comportera un étage, deux étages, trois étages ou plus. Les deux éléments constants sont constitués par le piétement circulaire (24) figuré à la figure 4, qui vient se visser sur la base du tube métallique (13) et l'embout terminal (21) qui assure à la fois l'assemblage supérieur des tubes du bâti et un élément d'esthétique et de finition très important.

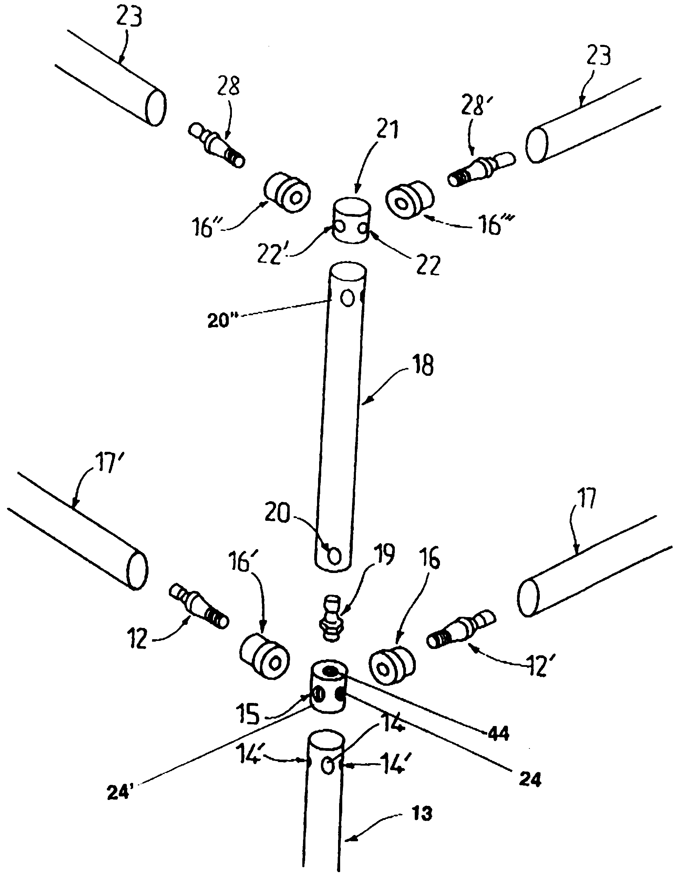

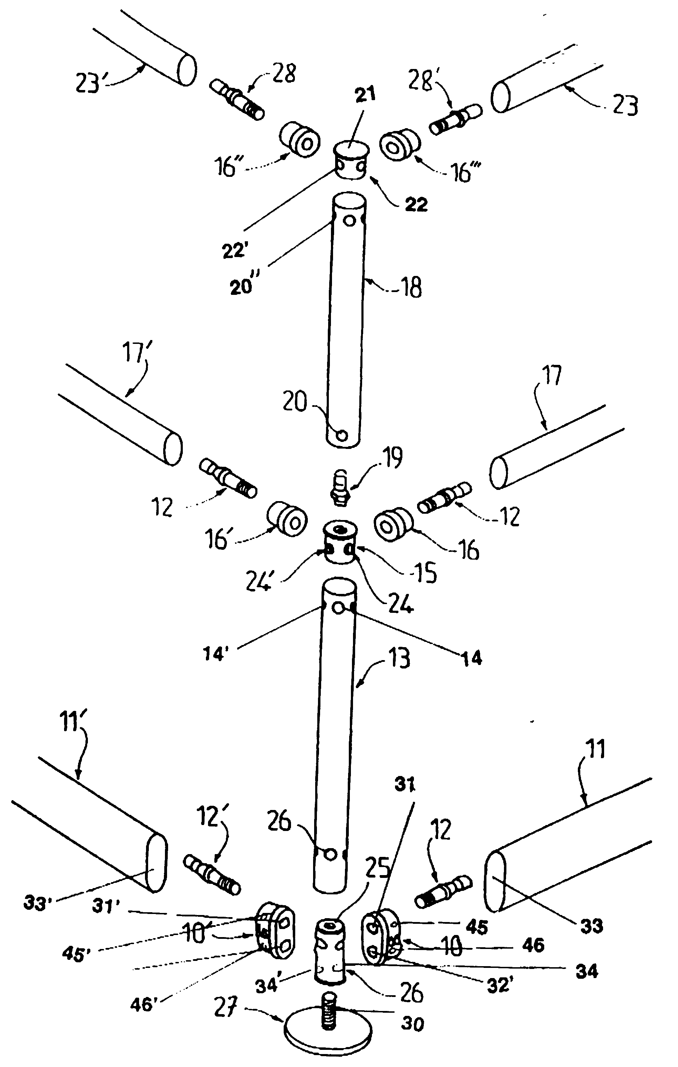

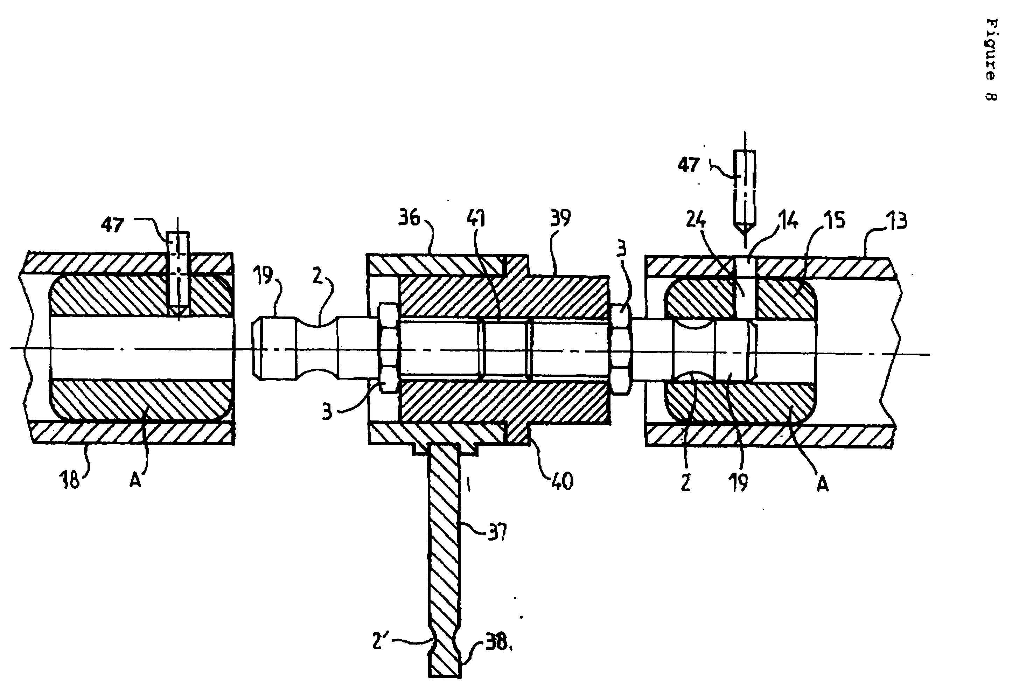

La figure 7 montre le montage de ces deux étages de structure reposant sur le piétement circulaire (27), la pièce de fixation formée d'un tube cylindrique fileté et de plusieurs orifices filetés (26) et (26') sur lesquels viennent s'appliquer sans solution de continuité, les deux embouts oblongs (10) et (10') venant s'insérer à l'extrémité des manchons (11) et (11') et assujettis d'une manière permanente par deux vis à tête plate (12) et (12'). Le tube métallique (13) vient se fixer sur la pièce d'assemblage (25) par l'intermédiaire d'une vis à tête plate à tige courte que l'on serre à l'intérieur du tube par une vis pointeau non représentée qui s'insère dans l'orifice fileté (26) et vient serrer sur la gorge de la vis à tête plate.

Le tube (13) est assujetti d'une manière permanente au tube (18) par l'intermédiaire de la pièce d'assemblage de forme cylindrique (15), par l'intermédiaire de la vis à tête plate (19). Cette même pièce d'assemblage (15) reçoit les deux tubes (17) et (17') assujettis par l'intermédiaire des pièces de jonction (16) et (16') qui viennent s'appliquer exactement sur la pièce (15) et qui laissent passer la partie filetée de la vis à tête plate (12) ou (12') qui coopère avec le filetage des orifices filetés (24) et (24').

Un tel montage tel qu'il est représenté assure l'assemblage de deux tubes horizontaux, la pièce (15) peut aussi comporter trois orifices filetés et assurer dans ces conditions la fixation de trois tubes horizontaux si cela s'avère nécessaire.

Le tube métallique (18) reçoit un autre embout (21) sur lequel viennent s'adapter deux autres tubes métalliques horizontaux (23) et (23') qui délimitent ainsi le cadre de panneaux rigides.

## Revendications

1. Dispositif d'assemblage de mobilier modulaire ou d'échafaudages démontables comportant des tubes creux ouverts aux deux extrémités,
• des manchons pourvus d'un orifice central nervuré (9) à l'extérieur, destinés à être insérés dans les extrémités des tubes creux qui peuvent être taraudés pour permettre l'insertion d'une vis pointeau (47) assurant la fixation permanente desdits tubes
• des pièces de jonction cylindriques intermédiaires (15) pourvues sur leur pourtour d'orifices filetés (24) (24') destinées à être introduites dans l'extrémité d'un tube (13)
• des embouts de forme sphérique (16)(16')(16")(16"'), destinés à épouser la forme d'un tube (13) (18), qui laisse les parties filetées des vis à tête plate (12)(12') (28)(28') les traverser et coopérer avec la pièce de jonction cylindrique (15), caractérisé en ce que le centre des pièces de jonction cylindriques intermédiaires (15) est pourvu d'un filetage (44) et le dispositif comporte
• une pièce d'assemblage cylindrique (26), pourvue sur son pourtour d'orifices filetés (34)(34')(34")(34"') et d'un filetage central (25)
• des embouts oblongs (10)(10'), comportant des orifices (31) (31') (32)(32'), destinés à coopérer avec ladite pièce d'assemblage (26) d'une part, et avec des longerons longitudinaux ovoïdes (11)(11') d'autre part
• un piétement de forme circulaire (27), équipé d'une tige filetée (30) destinée à être vissée dans la pièce d'assemblage (26).

2. Dispositif d'assemblage d'éléments de mobilier modulaire ou d'échafaudages démontables selon la revendication 1, comportant des tubes creux ouverts à leurs extrémités, caractérisé en ce qu'à l'une ou aux deux extrémités desdits tubes, on trouve inséré, d'une manière permanente, un manchon (A) creux, nervuré (9) à l'extérieur, sur lequel vient coopérer l'extrémité d'une vis à tête plate (19), dont l'autre extrémité vient s'insérer dans la partie filetée (44) disposée au centre d'une pièce de jonction cylindrique (15), que l'on insère dans une des extrémités d'un tube (13); la pièce cylindrique (15) étant pourvue sur son pourtour, d'orifices filetés (24)(24'), dans lesquels viennent se fixer, d'une manière permanente, d'autres tubes intermédiaires horizontaux et/ou verticaux (11)(11') (17)(17') (18), assujettis par l'intermédiaire de vis à tête plate (12)(12') (19), dont une extrémité est insérée dans le manchon (A), introduit dans un desdits tubes (17)(17') et dont l'autre extrémité traverse un embout (16) de forme sphérique, dont la surface terminale est de forme ovoïde et qui épouse la forme du tube (13), puis qui vient s'assujettir dans les orifices (24)(24') du pourtour de la pièce de jonction cylindrique (15) placée à l'intérieur de l'extrémité d'un tube (13).

3. Dispositif d'assemblage de mobilier modulaire ou échafaudages démontables selon la revendication 1 ou la revendication 2 comportant :
• en outre, une bague externe (39) pourvue d'un filetage central (41), dans laquelle, à chacune de ses extrémités, on visse l'extrémité (4) d'une vis à tête plate (19), dont l'autre extrémité (19) est insérée dans la pièce de jonction cylindrique (15), et l'extrémité d'une deuxième vis à tête plate (19) assujettie à un manchon (A) d'un tube (18), ladite bague externe (39), comportant intercalé un anneau cylindrique lisse (36), qui porte une tige qui s'étend perpendiculairement à l'anneau (37), se terminant par une tête plate (38), ledit anneau (36) pouvant tourner librement sur ladite bague externe (39) et assurer la rotation de la pièce, en étant retenu par un rebord (40) d'un diamètre plus grand que le corps de la bague externe (39).
• et des vis à tête plate (19)(12)(12')(28)(28'), filetées à une extrémité (4) et comportant un anneau de serrage (3), une tête plate (1) et une gorge (2).

4. Dispositif d'assemblage selon la revendication 1 et/ou 2, caractérisé en ce que les deux tubes métalliques (13)(18), sont assemblés d'une manière rigide dans un plan vertical.

5. Dispositif d'assemblage selon les revendications 1, 2 et 4, caractérisé en ce que les tubes horizontaux (11)(11') (17)(17') (23)(23') sont assemblés d'une manière rigide dans un plan horizontal.

6. Dispositif d'assemblage selon l'une au moins des revendications précédentes, caractérisé en ce que le tube terminal supérieur (18) est pourvu d'un embout (21) inséré dans l'extrémité supérieure dudit tube supérieur (18), ledit embout (21) étant doté d'orifices filetés sur son pourtour (22)(22') correspondant aux orifices (20) disposés dans l'extrémité supérieure du tube terminal supérieur (18) et comportant éventuellement un filetage central, lesdits orifices (22)(22') étant destinés à recevoir l'extrémité filetée des vis à tête plate (28)(28'), après avoir, au préalable, traversé un embout de forme sphérique (16")(16"') dont l'extrémité opposée de celui-ci coopère avec un manchon (A) inséré dans l'extrémité d'un tube horizontal (23)(23').

7. Dispositif selon l'une au moins des revendications précédentes, caractérisé en ce que le tube métallique terminal inférieur (13) est assujetti à un piétement de forme circulaire (27) par l'intermédiaire d'une pièce d'assemblage cylindrique (26), dans laquelle est vissée une vis à tête plate (19), la tête plate (1) de ladite vis étant insérée dans le manchon (A) placé à l'extrémité inférieure du tube (13) et bloquée à travers l'orifice fileté (20), par une vis pointeau (47).

8. Dispositif d'assemblage selon l'une au moins des revendications précédentes, caractérisé en ce que la pièce d'assemblage cylindrique (26) coopère, en outre, avec des longerons longitudinaux de section ovoïde (11)(11') par l'intermédiaire d'embouts oblongs (10)(10'), pourvus d'orifices (31)(31') (32)(32'), à travers lesquels passent les vis à tête plate (12)(12'), dont la tête plate (1) est insérée dans lesdits embouts (10)(10') d'une part, et dont l'extrémité filetée est vissée dans l'orifice (34)(34')(34")(34"') de la pièce d'assemblage cylindrique (26).

9. Dispositif d'assemblage selon l'une au moins des revendications précédentes, caractérisé en ce que l'embout oblong (10)(10') présente une gorge longitudinale de forme circulaire qui vient épouser la surface du tube (13) une fois que les vis à tête plate (12)(12') ont été serrées dans la pièce d'assemblage (26).

10. Dispositif d'assemblage selon l'une au moins des revendications précédentes, caractérisé en ce que les embouts oblongs (10)(10') viennent s'insérer dans des longerons ovoïdes (11)(11') fixés en bordure du plan de travail d'un meuble de bureau.

11. Dispositif d'assemblage selon l'une au moins des revendications précédentes, caractérisé en ce que les tubes métalliques (13) (18) (17) (17') (23)(23') et le longeron longitudinal ovoïde (11)(11') forment les montants verticaux et les montants horizontaux qui déterminent un espace dans lequel sont insérés, d'une manière permanente, des panneaux rigides présentant des gorges arrondies, s'adaptant exactement à la surface des tubes métalliques.

12. Meubles de bureau et notamment bureaux, étagères, bibliothèques, meubles de rangement ou de classement et/ou d'échafaudages obtenus au moyen du dispositif selon les revendications 1 à 11.

## Patentansprüche

1. Montageeinrichtung für modulares Mobiliar oder demontierbare Gestelle, umfassend
- beidendig offene Hohlrohre,
- Hülsen, welche mit einer zentralen Öffnung ausgeführt sind, außen gerippt (9) sind und dazu bestimmt sind, in die Enden der Hohlrohre eingesetzt zu werden, in die ein Gewinde geschnitten sein kann, um das Einsetzen einer die dauerhafte Fixierung der Rohre gewährleistenden Arretierschraube (47) zu ermöglichen,
- zylindrische Zwischenverbindungsstücke (15), welche an ihrem Umfang mit Gewindeöffnungen (24) (24') ausgeführt sind und dazu bestimmt sind, in das Ende eines Rohrs (13) eingeführt zu werden,
- Ansatzteile mit runder Form (16) (16') (16") (16"'), welche dazu bestimmt sind, sich an die Form eines Rohrs (13) (18) anzuschmiegen, das die Gewindeabschnitte von Flachkopfschrauben (12) (12') (28) (28') sie durchsetzen und mit dem zylindrischen Verbindungsstück (15) zusammenwirken läßt,
dadurch gekennzeichnet, daß das Zentrum der zylindrischen Zwischenverbindungsstücke (15) mit einem Gewinde (44) ausgeführt ist und die Einrichtung umfaßt :
- ein zylindrisches Montagestück (26), welches an seinem Umfang mit Gewindeöffnungen (34) (34') (34") (34"') und mit einem zentralen Gewinde (25) ausgeführt ist,
- längliche Ansatzteile (10) (10'), welche Öffnungen (31) (31') (32) (32') aufweisen und dazu bestimmt sind, einerseits mit dem Montagestück (26) und andererseits mit ovalen Längsträgern (11) (11') zusammenwirken,
- einen kreisförmigen Tragfuß (27), welcher mit einem Gewindestab (30) ausgeführt ist, der dazu bestimmt ist, in das Montagestück (26) geschraubt zu werden.

2. Montageeinrichtung für Elemente modularen Mobiliars oder demontierbare Gestelle nach Anspruch 1, umfassend an ihren Enden offene Hohlrohre,
dadurch gekennzeichnet, daß sich an einem oder beiden Enden den Rohre eine auf dauerhafte Weise eingesetzte Hohlhülse (A) befindet, welche außen gerippt (9) ist und mit welcher das Ende einer Flachkopfschraube (19) zur Zusammenwirkung gelangt, deren anderes Ende in den Gewindeabschnitt (44) eingesetzt wird, der sich im Zentrum eines zylindrischen Verbindungsstücks (15) befindet, das in eines der Enden eines Rohrs (13) eingesetzt wird, wobei das zylindrische Stück (15) an seinem Umfang mit Gewindeöffnungen (24) (24') versehen ist, in welchen auf dauerhafte Weise weitere horizontale und/oder vertikale Zwischenrohre (11) (11') (17) (17') (18) fixiert werden, die vermittels Flachkopfschrauben (12) (12') (19) befestigt werden, deren eines Ende in die in eines der Rohre (17) (17') eingeführte Hülse (A) eingesetzt wird und deren anderes Ende ein Ansatzteil (16) mit runder Form durchsetzt, dessen Endfläche ovale Form besitzt und das sich an die Form des Rohrs (13) anschmiegt und dann in den Öffnungen (24) (24') des Umfangs des in das Ende eines Rohrs (13) eingesetzten zylindrischen Verbindungsstücks (15) befestigt wird.

3. Montageeinrichtung für modulares Mobiliar oder demontierbare Gestelle nach Anspruch 1 oder Anspruch 2, umfassend :
- darüber hinaus ein externes Ringteil (39), welches mit einem zentralen Gewinde (41) ausgeführt ist, in das an jedem seiner Enden das Ende (4) einer Flachkopfschraube (19), deren anderes Ende (19) in das zylindrische Verbindungsstück (15) eingesetzt wird, sowie das Ende einer zweiten Flachkopfschraube (19) geschraubt wird, welche an einer Hülse (A) eines Rohrs (18) befestigt wird, wobei das externe Ringteil (39) einen eingeschobenen, glatten zylindrischen Ring (36) aufweist, der einen sich orthogonal zum Ring erstreckenden, mit einem Flachkopf (38) endenden Stift (37) trägt, wobei sich der Ring (36) frei auf dem externen Ringteil (39) drehen und die Drehung des Stücks sicherstellen kann, wobei er von einer Randleiste (40) gehalten wird, deren Durchmesser größer als der Körper des externen Ringteils (39) ist, und Flachkopfschrauben (19) (12) (12') (28) (28'), welche an einem Ende (4) mit einem Gewinde ausgeführt sind und einen Haltering (3), einen Flachkopf (1) sowie eine Vertiefung (2) aufweisen.

4. Montageeinrichtung nach Anspruch 1 und/oder 2, dadurch gekennzeichnet, daß die beiden Metallrohre (13) (18) in einer vertikalen Ebene auf starre Weise montiert sind.

5. Montageeinrichtung nach den Ansprüchen 1, 2 und 4, dadurch gekennzeichnet, daß die horizontalen Rohre (11) (11') (17) (17') (23) (23') in einer horizontalen Ebene auf starre Weise montiert sind.

6. Montageeinrichtung nach mindestens einem der vorhergehenden Ansprüche, dadurch gekennzeichnet, daß das obere Endrohr (18) mit einem Einsatz (21) ausgeführt ist, welcher in das obere Ende dieses oberen Rohrs (18) eingesetzt ist, wobei der Einsatz (21) an seinem Umfang mit Gewindeöffnungen (22) (22') versehen ist, welche am oberen Ende des oberen Endrohrs (18) angeordneten Öffnungen (20) entsprechen, und gegebenenfalls ein zentrales Gewinde aufweist, wobei die Öffnungen (22) (22') dazu bestimmt sind, das Gewindeende von Flachkopfschrauben (28) (28') aufzunehmen, nachdem diese zuvor ein Ansatzteil mit runder Form (16") (16"') durchsetzt haben und deren diesem gegenüberliegendes Ende mit einer in das Ende eines horizontalen Rohrs (23) (23') eingesetzten Hülse (A) zusammenwirkt.

7. Einrichtung nach mindestens einem der vorhergehenden Ansprüche, dadurch gekennzeichnet, daß das untere metallische Endrohr (13) an einem kreisförmigen Tragfuß (27) vermittels eines zylindrischen Montagestücks (26) befestigt ist, in welches eine Flachkopfschraube (19) geschraubt ist, wobei der Flachkopf (1) dieser Schraube in die am unteren Ende des Rohrs (13) befindliche Hülse (A) eingesetzt ist und durch eine Arretierschraube (47) durch die Gewindeöffnung (20) hindurch festgelegt ist.

8. Montageeinrichtung nach mindestens einem der vorhergehenden Ansprüche,
dadurch gekennzeichnet, daß das zylindrische Montagestück (26) ferner mit Längsträgern ovalen Querschnitts (11) (11') unter Vermittlung von länglichen Ansatzteilen (10) (10') zusammenwirkt, welche mit Öffnungen (31) (31') (32) (32') ausgeführt sind, durch die die Flachkopfschrauben (12) (12') hindurchgehen, deren Flachkopf (1) zum einen in die Ansatzteile (10) (10') eingesetzt ist und deren Gewindeende in die Öffnung (34) (34') (34") (34"') des zylindrischen Montagestücks (26) geschraubt ist.

9. Montageeinrichtung nach mindestens einem der vorhergehenden Ansprüche,
dadurch gekennzeichnet, daß das längliche Ansatzteil (10) (10') eine kreisförmige Längsvertiefung aufweist, die sich an die Oberfläche des Rohrs (13) anschmiegt, sobald die Flachkopfschraube (12) (12') in das Montagestück (26) eingeschraubt ist.

10. Montageeinrichtung nach mindestens einem der vorhergehenden Ansprüche,
dadurch gekennzeichnet, daß die länglichen Ansatzteile (10) (10') in ovale Träger (11) (11') eingesetzt werden, welche am Rand der Arbeitsebene eines Büromöbelstücks befestigt sind.

11. Montageeinrichtung nach mindestens einem der vorhergehenden Ansprüche,
dadurch gekennzeichnet, daß die Metallrohre (13) (18) (17) (17') (23) (23') und der ovale Längsträger (11) (11') die vertikalen Streben und die horizontalen Streben bilden, die einen Raum begrenzen, in den auf dauerhafte Weise steife Platten eingesetzt sind, welche rundliche Vertiefungen aufweisen, die sich exakt an die Oberfläche der Metallrohre anfügen.

12. Büromöbelstücke und insbesondere Schreibtische, Regale, Bibliotheken, Möbelstücke zum Ordnen oder zum Sortieren und/oder zur Stapelbildung, die mittels der Einrichtung nach den Ansprüchen 1 bis 11 erhalten sind.

## Claims

1. An assembly device permitting the construction of modular furniture elements or scaffoldings which mainly uses :
- hollow metal tubes open at both ends,
- sockets provided with a ribbed central opening (9) on the outside intended to be inserted in the ends of hollow tubes which may be threaded to allow the insertion of a threaded rod (47) permitting the permanent setting of said tubes,
- intermediate cylindrical junction parts (15) provided on their circumference with threaded openings (24) (24') intended to be inserted at the end of a tube (13),
- tips of spherical shape (16) (16') (16") (16"') intended to fit over the shape of a tube (13) (18) which let the threaded parts of the flat head bolts (12) (12') (28) (28') pass through and cooperate with the cylindrical junctions part (15),
wherein the center of the intermediate cylindrical junction part (15) is provided with a thread (44) and the whole device includes a cylindrical assembly part (26) fitted out on its circumference with threaded apertures (34) (34') (34") (34"') and a central threading (25),
- oblong tips (10) (10') including apertures (31) (31') (32) (32') intended to cooperate with the said junction part (26) on one side, and with the oval-shaped longitudinal longerons (11) (11') on the other side,
- a foot of circular form (27) provided with a threaded shank (30) intended to be screwed in the assembly part (26).

2. Assembly device of modular furniture elements or dismountable scaffoldings according to claim 1, which uses hollow tubes open at both ends, wherein at one or both ends of the said tubes they are inserted in a permanent fashion a hollow socket (A), ribbed at the outside (9), on which the end of a flat head bolt (19) comes to cooperate, the other end of which comes to be inserted in the threaded part (44) located in the center of a cylindrical junction piece (15) which is inserted in one of the ends of a tube (13); the said cylindrical piece (15) being provided on its circumference with threaded openings (24) (24') in which come to be setted in a permanent fashion other horizontal and/or vertical intermediate tubes (11) (11') (17) (17') (18) settled through flat head bolts (12) (12') (19) one end of which is inserted in the socket (A) introduced in one of the said tubes (17) (17') and the other end of which passes through a tip (16) of spherical shape the end surface of which is ovally shaped and fits over the surface of the cylindrical junction part (15) placed inside the end of a tube (13).

3. Assembly device of modular furniture or dismountable scaffoldings according to claim 1 or claim 2, including :
- moreover an external collar (39) provided with a central threading in which at each of its ends (4), the end of a flat head bolt (19) is screwed the other end of which (19) is inserted in the cylindrical junction part (15) and the end of a second flat head bolt (19) secured to a socket (A) of a tube (18), said external ring including intercalated a smooth cylindrical ring (36) which bears a rod extending perpendiculary to the ring (37) and ending with a flat head (38), are inserted, said ring (36) being able to freely turn on the said external collar (39) and insuring the rotation of the part, while being retained with an edge (40) of a diameter somewhat greater than the body of the external collar
- and flat head bolts (19) (12) (12') (28) (28') threaded at one end (4) and including a settling ring (3), a flat head (1) and a groove (2).

4. Assembly device according to claim 1 and/or claim 2 wherein the two metallic tubes (13) (18) are mounted in a rigid manner in a vertical plane.

5. Assembly device according to claim 1, 2 and 4, wherein the horizontal tubes (11) (11') (17) (17') (23) (23') are mounted in a rigid manner in a horizontal plane.

6. Assembly device according to at least one of the preceding claims wherein the upper end tube (18) is provided with a tip (21) inserted in the upper end of said upper tube (18), said tip (21) being provided with openings threaded on the circumference (22) (22') in a manner corresponding to the openings (20) located in the upper end of the upper end tube (18) and optionally including a central threading, said openings (22) (22') being intended to receive the threaded end of the flat head bolts (28) (28') after having at first go through a spherically shaped tip (16") (16"') the opposite end of which cooperates with a socket (A) inserted in the external part of a horizontal tube (23) (23').

7. Device according to at least one of the preceding claims, wherein the lower terminal metallic tube (13) is fastened to a circular-shaped foot through a cylindrical mounting part (26) in which a flat head bolt (19) is threaded, the flat head (1) of said bolt being inserted in the socket (A) located at the lower end of tube (13) and blocked through the threaded opening (20) by a threaded rod (47).

8. Assembly device according to at least one of the preceding claims, wherein the cylindrical assembly part (26) moreover cooperates with longitudinal oval-shaped longerons (11) (11') through oblong tips (10) (10') provided with openings (31) (31') (32) (32') through which the flat head bolts (12) (12') pass, the flat head (1) of which is inserted in the said tips (10) (10') on one part and the threaded end is screwed in the opening (34) (34') (34") (34"') of the cylindrical assembly part (26).

9. Assembly device according to at least one of the preceding claims wherein the oblong tip (10) (10') shows a longitudinal groove of circular shape which come to fit exactly over the tube surface (13) once the flat head bolts (12) (12') have been tightened in the assembly part (26).

10. An assembly device according to at least one of the preceding claims in which the oblong end-pieces (10) (10') are inserted in the oval-shaped sleeve fixed on the edge of the work surface of a piece of office furniture.

11. An assembly device according to at least one of the preceding claims wherein the metal mountings (13) (18) (17) (17') (23) (23') and the oval-shaped longitudinal longerons (11) (11') form the vertical mountings and the horizontal mountings which determin a space in which rigid panels are permanently inserted, which have rounded grooves fitting exactly over the surface of the metal tubes.

12. Office furniture, in particular desks, shelves, bookcases, storage or filing units, and/or scaffholdings, obtained by means of the assembly device according to claims 1 to 11.
